# FASCICULE DE BREVET EUROPEEN

(11) **EP 0 544 367 B1**
(45) Date de publication et mention de la délivrance du brevet: **11.09.1996**
(21) Numéro de dépôt: 92203573.8
(22) Date de dépôt: 19.11.1992
(51) Int. Cl.: G01B 7/14, G01D 5/24, G01K 13/08

(54) **Capteur capacitif ayant une face avant conductrice pour former une armature de condensateur, et un câble coaxial blindé à isolant minéral**
Kapazitiver Sensor mit leitender Frontseite, zur Bildung einer Kondensatorarmatur und einem mineralisierten abgeschirmten Koaxialkabel
Capacitive sensor having a conductive front face forming a capacitor/armature, and a shielded coaxial cable with a mineral-based insulation

(30) Priorité: 27.11.1991 FR 9114673
(43) Date de publication de la demande: 02.06.1993
(73) Titulaire: THERMOCOAX, F-92150 Suresnes (FR); Philips Electronics N.V., 5621 BA Eindhoven (NL)
(72) Inventeur: Coville, Patrick, Société Civile S.P.I.D., F-75008 Paris (FR); Renard, Modeste, Société Civile S.P.I.D., F-75008 Paris (FR); Bailleul, Gilles, Société Civile S.P.I.D., F-75008 Paris (FR)
(74) Mandataire: Landousy, Christian

(56) Documents cités:
- EP-A- 0 246 576
- EP-A- 0 334 441
- US-A- 2 802 178

## Description

L'invention concerne un capteur capacitif comprenant un corps de capteur ayant un boîtier, une face avant conductrice et des moyens d'isolement entre la face conductrice et le boîtier, et comprenant un câble coaxial du type blindé à isolant minéral ayant une gaine et un conducteur central appelé âme séparés par ledit isolant minéral, ledit câble coaxial étant arrangé pour la connexion de la face conductrice à un dispositif de mesure de la capacité du système formé par cette face conductrice constituant une première armature de condensateur et par une surface conductrice de référence disposée en vis-à-vis à une distance déterminée d constituant une seconde armature de condensateur.

Par câble coaxial blindé à isolant minéral, il faut entendre un câble coaxial dont la gaine est métallique et isolée de l'âme par un isolant minéral en poudre compactée.

L'invention trouve par exemple son application dans l'aéronautique, pour mesurer le jeu entre l'extrémité des aubes tournantes d'un réacteur et le carter.

Il est déjà connu de l'état de la technique, par la demande de brevet EP 0246576, un système de mesure capacitif. Ce système comprend un corps de capteur formés d'éléments (18, 19, 20) respectivement raccordés au conducteur central ou âme (21), à une première gaine (23) et à une seconde gaine (22) d'un câble coaxial. Les éléments métalliques du corps du capteur sont isolés les uns des autres par une pièce céramique d'oxyde d'aluminium ; les éléments du câble sont isolés les uns des autres par de la poudre d'oxyde de magnésium et d'alumine. Le câble coaxial est du type blindé à isolant minéral tel que disponible dans le commerce. De ce fait, il est utilisé tel qu'obtenu dans le commerce et ensuite raccordé, par brasure et soudure appropriées, au corps du capteur. Le diamètre externe du corps du capteur est de l'ordre de 10 mm et supérieur au diamètre du câble, de manière à ce que le câble reste souple. Les différents éléments du corps de capteur ont ainsi des diamètres supérieurs aux diamètres des éléments correspondants du câble coaxial. La face avant conductrice du corps du capteur est une plaque en platine, brasée à l'extrémité du conducteur central du câble qui s'avance dans le corps du capteur ; cette plaque forme une des électrodes de mesure du système capacitif. Le corps du capteur et l'extrémité du câble coaxial sont en outre protégés par un carter qui est soudé autour de leur zone de raccordement.

Il est en outre déjà connu de l'état de la technique par le brevet des Etats-Unis US 2 802 178, un dispositif de détection de mouvement (SHAFER, 1957). Ce dispositif comprend un corps de capteur formé pour une part du prolongement des éléments d'un câble coaxial 10. Ainsi, dans le corps du capteur, se trouvent des prolongements du conducteur central (12), d'une couche d'isolation (13), d'une gaine interne (14), d'une seconde couche d'isolation (15), et d'une gaine externe (16). Ce corps de capteur n'est pas uniquement composé de ces éléments : il comprend en outre une plaque (21) maintenue par un scellement à l'extrémité (12) du conducteur central, pour former une électrode de mesure, un carter (11) maintenu par un scellement (17) autour des éléments d'extrémité du câble ; et un isolant pour isoler de ce carter (11) les éléments métalliques d'extrémité de câble, qui ont des longueurs dégressives. Dans le corps du capteur, les éléments d'extrémité du câble coaxial ont des diamètres identiques à ceux des éléments du câble coaxial proprement dit ; donc le corps du capteur comprend les éléments d'extrémité du câble qui n'ont pas subi de modifications de diamètres.

Un tel capteur est également déjà connu de l'état de la technique par la demande de brevet européen EP-0 334 441.

Ce capteur comprend un corps de capteur formé d'un boîtier et d'une face avant conductrice, avec une pièce intermédiaire d'isolation de la face conductrice vis-à-vis du boîtier. Ce capteur comprend en outre un câble coaxial pour connecter la face conductrice à un dispositif de mesure de capacité.

La face conductrice est destinée à être disposée à l'alignement de la surface interne du carter d'une turbomachine, dans le domaine de l'aéronautique. La mesure de la capacité qui apparaît entre la surface conductrice du capteur et l'extrémité des aubes tournantes du moteur permet de connaître le jeu qui existe, en dynamique, entre ces extrémités et le carter.

Ce capteur permet également de mesurer la température au point de mesure de la capacité. A cet effet, l'âme du câble coaxial est constituée des deux fils d'un thermocouple dont le point de soudure est en contact électrique et thermique avec la face avant conductrice du corps du capteur. Ainsi les fils du thermocouple transmettent à la fois le signal électrique de mesure de la température et le signal électrique de mesure de la capacité.

L'ensemble du dispositif est approprié à supporter les très hautes températures qui règnent dans l'enceinte du réacteur. Le câble coaxial est du type blindé à isolant minéral. La gaine du câble coaxial est un cylindre métallique de très petit diamètre, de l'ordre de 1 à 2 mm. L'âme est isolée de la gaine par un isolant minéral compacté. La gaine est coupée à une extrémité du câble pour dénuder le point de soudure et les fils du thermocouple sur une petite longueur.

Le point de soudure du thermocouple est scellé à la surface conductrice renforcée par une électrode métallique. La pièce intermédiaire d'isolation est scellée d'une part au boitier et d'autre part à l'électrode. De plus, le boitier est scellé à la gaine métallique du câble coaxial pour rendre l'ensemble du capteur étanche. Toutes les pièces sont en outre réfractaires.

Ce dispositif présente néanmoins des inconvénients. En premier lieu, sa fabrication nécessite un grand nombre d'éléments différents, ce qui est coûteux. L'ajustage des pièces doit être très précis, ce qui est également coûteux.

En second lieu, les scellements qui sont nombreux, sont fragiles aux vibrations. Or selon le genre de moteur auquel le capteur est appliqué, les vibrations peuvent être très différentes et dans certains cas très destructrices.

En troisième lieu, le câble présente entre l'âme et la gaine une capacité, dont la valeur dépend de la longueur du câble, et qui vient perturber la valeur de la capacité mesurée par le capteur, ceci d'autant plus que le câble peut être très long, afin de transporter les données jusqu'à l'appareil de mesure, loin du moteur.

Un des buts de l'invention est donc de fournir un capteur capacitif qui comporte le plus petit nombre possible d'éléments dans sa fabrication.

Un autre but de l'invention est de fournir un tel capteur qui comporte le plus petit nombre possible de scellements.

Un autre but de l'invention est de fournir un tel capteur qui comporte le plus petit nombre possible de scellements.

Un autre but de l'invention est de fournir un capteur dans lequel on peut annuler l'effet de la capacité parasite du câble sur la mesure.

Selon l'invention, un capteur tel que décrit dans le préambule est caractérisé en ce que le corps du capteur capacitif est constitué par une partie terminale du câble coaxial, ayant une partie terminale de l'âme conductrice munie d'une extrémité plane ouverte pour former directement ladite face avant conductrice, ayant une partie terminale de la gaine pour former ledit boîtier, et ayant une partie terminale de l'isolant minéral pour isoler le boîtier de la face avant conductrice, et en ce que, pour former le corps du capteur, les diamètres de l'âme conductrice, de la gaine, et de l'isolant minéral, dans ladite partie terminale, sont plusieurs fois, les diamètres respectivement de l'âme, de la gaine et de l'isolant minéral du câble coaxial proprement dit.

Un avantage de ce capteur est que le nombre des éléments qui le constituent est réduit au minimum, étant réduit aux éléments essentiels du câble lui-même : l'âme, la gaine métallique et l'isolant minéral.

Un autre avantage réside dans le fait qu'il n'est plus besoin de prévoir des pièces spéciales, ayant des cotes précises pour s'ajuster de manière parfaite, afin de réaliser au mieux le corps du boîtier. Il en résulte une économie considérable de fabrication et de montage.

Cette économie ne se fait pas au détriment de la qualité du capteur puisque toutes les pièces sont réfractaires et montées sans scellement. La tenue en température et la tenue aux vibrations sont donc considérablement améliorées.

Un autre avantage réside dans le fait que le diamètre du corps du capteur est supérieur au diamètre du câble. Par exemple le diamètre du corps du capteur peut être 2 à 10 fois celui du câble. De ce fait le corps du capteur est facile à mettre en place dans le moteur, pouvant être maintenu par la partie équivalente au boîtier, et que le câble de petit diamètre a une souplesse suffisante pour s'adapter à tout support et transporter les informations loin du moteur.

Dans une mise en oeuvre, l'extrémité libre du capteur est munie d'un bouchon isolant réfractaire laissant libre l'extrémité de l'âme servant de surface conductrice, et de la gaine intermédiaire quand elle existe.

Dans cette mise en oeuvre, le capteur présente l'avantage d'être étanche, tout en présentant un nombre minimal de scellements : un seul scellement, celui du bouchon.

Dans une mise en oeuvre, le câble et le corps du capteur ont deux gaines métalliques concentriques séparées par un isolant minéral en poudre compactée.

Ainsi, ce capteur présente l'avantage que la gaine intermédiaire peut servir d'anneau de garde pour fournir la mesure de la capacité entre la surface de référence et cet anneau de garde. Une mesure différentielle appliquée à la mesure de la capacité entre la surface de référence et l'âme du capteur permettra d'éliminer l'effet parasite de la capacité du câble. La mesure de la capacité est donc améliorée.

Dans une forme de réalisation, l'âme est un conducteur central unique, et le capteur est alors purement capacitif.

Dans une variante, l'âme est constituée des deux fils d'un thermocouple, le point de soudure du thermocouple étant utilisé comme surface conductrice pour constituer ladite première armature du condensateur. Dans ce cas le capteur fournit à la fois une mesure de capacité et de température en un point donné.

L'invention est décrite ci-après en détail, en référence avec les figures schématiques annexées dont :
- la figure 1 qui illustre le principe de fonctionnement d'un capteur capacitif ;
- la figure 2 qui illustre le principe de fonctionnement d'un capteur capacitif muni d'un anneau de garde ;
- la figure 3a qui montre en coupe longitudinale un capteur capacitif approprié à fonctionner comme illustré par la figure 1 ;
- la figure 3b qui montre en coupe transversale selon A-A le capteur de la figure 3a ;
- la figure 4a qui montre en coupe longitudinale un capteur capacitif approprié à fonctionner comme illustré par la figure 2 ;
- la figure 4b qui montre en coupe transversale selon B-B le capteur de la figure 3b ;
- la figure 5 qui représente une ébauche d'un capteur dont l'âme est constituée d'un conducteur central simple, en coupe longitudinale ;
- la figure 6 qui représente une ébauche d'un capteur dont l'âme est constituée d'un thermocouple.

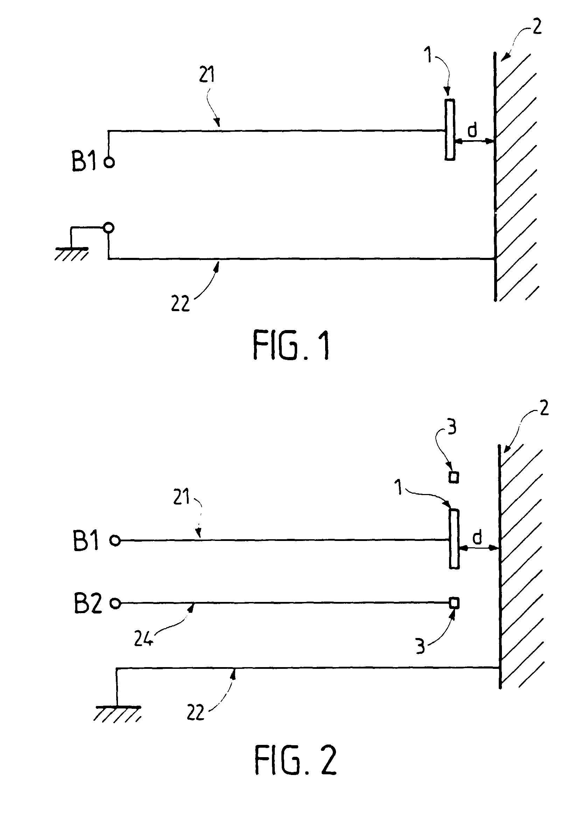

En référence avec la figure 1, un capteur capacitif comporte une surface conductrice ou première armature de condensateur 1. Cette surface conductrice est destinée à être disposée en vis-à-vis d'une seconde surface conductrice ou seconde armature de condensateur 2.

Le capteur est amené à mesurer la valeur de la capacité du condensateur formé des deux armatures 1 et 2, séparées par une distance donnée d. La seconde armature 2 peut être fixe ou mobile, et la valeur de la distance d peut être variable.

Pour mesurer cette capacité, la première armature 1 est reliée à l'âme d'un câble coaxial, et la seconde armature 2 est reliée à la gaine du câble coaxial par la masse. L'âme et la gaine du câble coaxial sont connectées aux bornes B1 et masse d'un dispositif de mesure de capacité qui fournit une première mesure C1.

Un tel capteur permet notamment de mesurer le jeu, en dynamique, entre le carter d'un turboréacteur et les aubes tournantes. A cet effet, la première armature 1 est fixée à l'alignement de la surface interne du carter, et au droit d'une rangée d'aubes tournantes. Chaque extrémité d'aube constitue la seconde armature 2 du condensateur lorsqu'elle passe devant la première armature 1. La connaissance de la capacité du condensateur 1, 2, permet de déduire la distance d qui sépare les armatures, et donc le jeu entre aubes et carter dans le turboréacteur. Cette connaissance est nécessaire au pilotage de l'asservissement du régime moteur.

La gaine du câble coaxial est métallique. Il apparait donc une capacité non négligeable entre la gaine et l'âme du câble coaxial.

En référence avec la figure 2, le capteur capacitif comporte une surface conductrice supplémentaire ou armature annexe 3. Cette surface conductrice supplémentaire 3 est également destinée à être disposée en vis-à-vis de la seconde armature 2. Cette surface conductrice supplémentaire ou armature annexe 3 est annulaire car elle est reliée à une gaine intermédiaire métallique du câble coaxial. Une capacité gênante du câble coaxial apparait donc maintenant entre cette gaine intermédiaire et la gaine externe. En connectant la gaine intermédiaire métallique à la borne B2 du dispositif de mesure de capacité, on peut connaître une valeur de capacité CI relative au condensateur formé par la surface conductrice supplémentaire 3 et la surface de référence 2.

Une mesure différentielle des valeurs C1 et C2 permet de connaître la valeur de la capacité relative auxdites première et seconde armatures 1 et 2 libérée au mieux de la capacité parasite due à la gaine du câble coaxial.

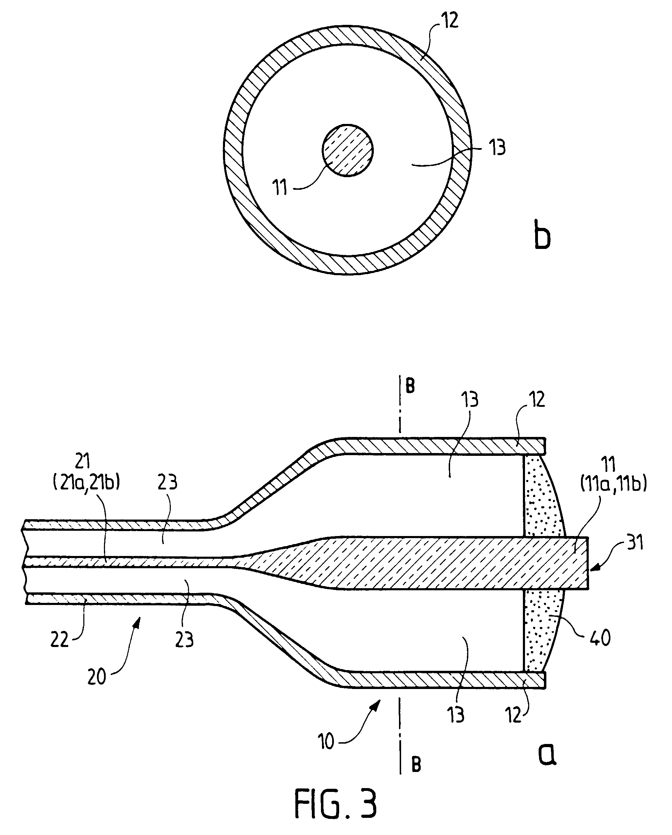

En référence avec la figure 3a qui est une coupe longitudinale du capteur selon l'invention, ce capteur comprend deux parties, un corps de capteur 10, et un câble coaxial blindé à isolant minéral 20. Le câble coaxial comprend une âme 21, qui peut être soit un conducteur central simple 21a, soit un thermocouple 21b. Le câble comprend ensuite une gaine métallique tubulaire 22, qui est isolée de l'âme par un isolant minéral en poudre compactée 23. Si l'âme est un thermocouple, les fils sont isolés l'un de l'autre et noyés dans l'isolant minéral en poudre 23.

Le corps du capteur 10 comprend le prolongement 11 de l'âme 21, c'est-à-dire soit le conducteur central simple 11a, soit les fils du thermocouple, dans ce cas référencés 11b. Le corps du capteur comprend aussi le prolongement 12 de la gaine 22 et le prolongement 13 de l'isolant minéral 23.

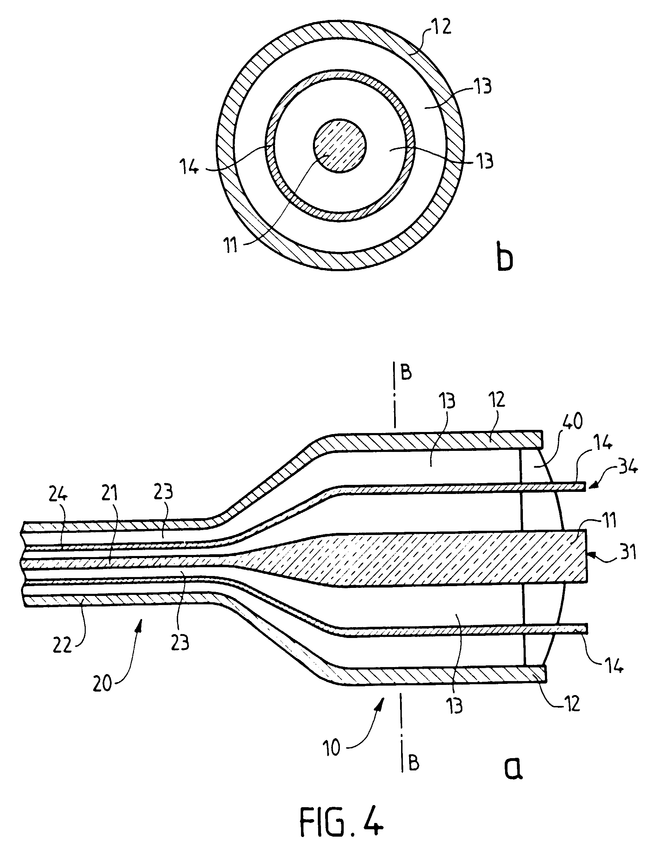

En référence avec la figure 4a, qui est une coupe longitudinale du capteur dans le cas où ce dernier comprend une gaine intermédiaire ou anneau de garde, ce capteur comprend, dans la partie du câble coaxial, la gaine cylindrique métallique coaxiale 24, isolée de la gaine extérieure 22 et de l'âme par de l'isolant minéral 23. Le corps 10 du capteur comprend le prolongement 14 de la gaine intermédiaire 24.

Dans l'un et l'autre des capteurs représentés sur les figures 3a et 4a, les extrémités libres 31 et 34, de l'âme et de la gaine intermédiaire respectivement, constituent des surfaces conductrices ou armature 1 et armature annexe 3 des condensateurs cités plus haut.

La gaine externe 22 est toujours portée à la masse de même que la seconde armature 2 du condensateur par principe.

Comme montré sur les figures 3a et 4a le diamètre du corps du capteur est favorablement supérieur au diamètre du câble coaxial. Cela procure l'avantage que le corps du capteur est choisi d'un diamètre suffisamment grand, approprié à réaliser les mesures de capacité et à être fixé à sa place de mesure, d'une manière aisée. Cela procure en outre l'avantage que le câble coaxial est de faible diamètre et donc suffisamment souple pour suivre un chemin sinueux, notamment pour transporter les informations aux systèmes de traitement des données loin de l'emplacement de la prise des données qui est le plus souvent le coeur d'un réacteur.

La forme spécifique du capteur selon l'invention est obtenue par un procédé de réalisation très facile à mettre en oeuvre et donc d'un coût aussi faible que possible.

Il faut savoir, comme enseigné par le brevet européen EP-0 145 060 de la société THERMOCOAX, que la réalisation d'un câble blindé à isolant minéral implique la formation d'une ébauche. Cette ébauche est formée d'une âme qui peut être un simple conducteur central, ou dans le cas du brevet cité, des fils de thermocouple, et d'une gaine cylindrique métallique. L'intervalle entre la gaine et l'âme est empli d'un isolant minéral en poudre. L'ébauche a un diamètre 1 à 10 fois supérieur au diamètre du câble fini. Le passage de l'ébauche au câble définitif se fait par des opérations mécaniques de tréfilage et martelage successives entrecoupées de recuits à haute température. De cette manière le câble terminé montre une certaine souplesse.

Pour réaliser le capteur capacitif selon l'invention, une ébauche de diamètre uniforme est réalisée pour le câble 20 et le corps 10 du capteur. Puis l'ébauche est soumise au traitement mécanique connu. Mais le diamètre de l'ébauche est moins réduit dans la zone correspondant au corps 10 du capteur que dans celle qui correspond au câble 20. Cela est obtenu facilement dans le cours des opérations mécaniques et thermiques successives.

La figure 3b montre en coupe transversale selon A-A le capteur illustré par la figure 3a. L'extrémité libre 31 de l'âme 21, 11 constitue la surface conductrice dite première armature 1 de condensateur.

La figure 4b montre en coupe transversale selon B-8 le capteur illustré par la figure 4a. L'extrémité libre 31 de l'âme 21, 11, constitue la surface conductrice dite première armature 1 de condensateur et l'extrémité libre 34 de la gaine intermédiaire 24, 14 constitue la surface conductrice supplémentaire 3 ou armature annexe de condensateur.

Les figures 3b et 4b montrent que les gaines intermédiaires 14, 24 et externes 12, 22 sont cylindriques et coaxiales.

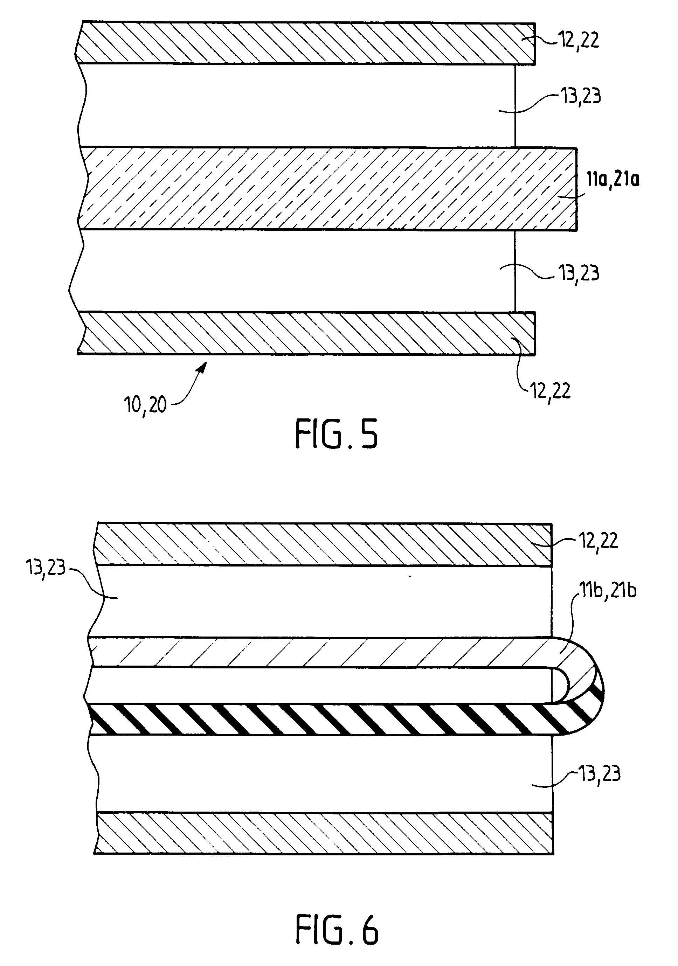

La figure 5 illustre une ébauche d'un capteur ayant un conducteur simple 11a, 21a comme âme, et la figure 6 illustre une ébauche d'un capteur ayant un thermocouple 11b, 21b comme âme.

Cette dernière ébauche comprend les fils du thermocouple 11b, 21b, une gaine externe 12, 22 et un isolant minéral 13, 23.

Les matériaux utilisés de manière préférentielle pour réaliser le capteur décrit plus haut sont rassemblés dans le tableau I vis-à-vis des références des différents éléments du capteur.

Les dimensions du capteur fini sont 6 à 12 mm pour le corps du capteur et 1 à 2 mm pour le câble. Le câble peut avoir plusieurs mètres de longueur.

Pour rendre le capteur étanche, un bouchon 40 peut être réalisé à l'extrémité électriquement ouverte du capteur par scellement d'un matériau réfractaire aux parties métalliques, c'est-à-dire la ou les gaines et l'âme, en laissant libre l'extrémité de l'âme, et l'extrémité de la gaine intermédiaire quand elle existe. Ce bouchon constitue le seul scellement du capteur. Un procédé pour réaliser ce bouchon peut inclure une vitrification par plasma.

**TABLEAU I**

| | | |
|---|---|---|
| Conducteur central simple | 11a | Acier inoxydable |
| | 21a | ou Inconel |
| | | ou Platine |
| Conducteur central thermocouple | 11b | K = chromel-Alumel, ou |
| | 21b | N = Nicrosil-Nisil, ou |
| | | S = Platine-Platine-Rhodié |
| Gaines | 22, 24 | Acier inoxydable ou |
| | 12, 14 | Inconel |
| Isolant minéral | 23, 13 | Poudre de Al₂O₃ ou |
| | | MgO, ou un mélange d'oxydes |
| Bouchon | 40 | Céramique vitrifiable |
| | | Ciment réfractaire |

## Revendications

1. Capteur capacitif comprenant un corps de capteur (10) ayant un boîtier (12), une face avant conductrice (31) et des moyens d'isolement (13) entre la face conductrice et le boîtier, et comprenant un câble coaxial (20) du type blindé à isolant minéral ayant une gaine (22) et un conducteur central appelé âme (21) séparés par ledit isolant minéral (23), ledit câble coaxial (20) étant arrangé pour la connexion de la face conductrice à un dispositif de mesure de la capacité du système formé par cette face conductrice constituant une première armature de condensateur et par une surface conductrice de référence disposée en vis-à-vis à une distance déterminée (d) constituant une seconde armature de condensateur, caractérisé en ce que le corps du capteur capacitif est constitué par une partie terminale (10) du câble coaxial (20), ayant une partie terminale (11) de l'âme conductrice (21) munie d'une extrémité plane ouverte pour former directement ladite face avant conductrice (31), ayant une partie terminale (12) de la gaine (22) pour former ledit boîtier (12), et ayant une partie terminale (13) de l'isolant minéral (23) pour isoler le boîtier (12) de la face avant conductrice (31),
et en ce que, pour former le corps du capteur, les diamètres de l'âme conductrice (11), de la gaine (12), et de l'isolant minéral (13), dans ladite partie terminale (10), sont plusieurs fois, les diamètres respectivement de l'âme (21), de la gaine (22) et de l'isolant minéral (23) du câble coaxial (20) proprement dit.

2. Capteur selon la revendication 1, caractérisé en ce que le câble (20) et le corps du capteur (10) ont entre l'âme (21,11) et la gaine externe (22,12), une gaine intermédiaire métallique concentrique (24,14), isolée de l'âme et de la gaine externe par un isolant minéral (23,13) en poudre compactée, pour servir d'anneau de garde (34).

3. Capteur selon l'une des revendications 1 ou 2, caractérisé en ce que, l'extrémité libre du capteur est munie d'un bouchon (40) isolant réfractaire laissant libre l'extrémité de l'âme (31) et éventuellement de la gaine intermédiaire (34) quand elle existe.

4. Capteur selon l'une des revendications 1 à 3, caractérisé en ce que l'âme (21,11) est un conducteur central simple.

5. Capteur selon l'une des revendications 1 à 3, caractérisé en ce que l'âme est formée des fils d'un thermocouple (21b,11b) dont le point de soudure constitue la surface conductrice pour mesurer à la fois une température et une capacité.

6. Procédé de réalisation pour fabriquer un capteur capacitif incluant un corps de capteur (10) ayant un boîtier (12), une face avant conductrice (31) et des moyens d'isolement (13) entre la face conductrice et le boîtier, et comprenant un câble coaxial (20) du type blindé à isolant minéral (23) ayant une gaine (22) connectée au boîtier (12), un conducteur central (21) appelé âme connecté à la face avant conductrice (31) et ledit isolant minéral (23) en correspondance avec les moyens d'isolement (13), ledit capteur capacitif étant constitué d'une partie terminale (10) du câble coaxial (20) dans laquelle les diamètres de l'âme conductrice (11), de la gaine (12,14), et de l'isolant minéral (13) sont plusieurs fois les diamètres respectivement de l'âme (21), de la gaine (22,24) et de l'isolant minéral (23) du câble coaxial (20) proprement dit,
ce procédé de réalisation comprenant :
- la formation d'une ébauche de diamètre supérieur ou égal à celui du boîtier (12) du capteur fini, ayant une âme (31,21,11) formée d'un conducteur simple (21a, 11a) ou d'un thermocouple (21b,11b) et ayant une ou deux gaines métalliques concentriques (12,22 ; 34,14,24), et un matériau de remplissage isolant minéral en poudre (13,23), séparant les éléments métalliques,
- l'application d'un procédé mécanique de réductions successives du diamètre de l'ébauche, par tréfilage et martelage entrecoupé de recuits à haute température, la région du câble coaxial proprement dite (20) étant soumise à une plus forte réduction de diamètre que la région du corps du capteur (10), dans un rapport de l'ordre de 1/2 à 1/10.

7. Procédé selon la revendication 6, caractérisé en ce qu'il comprend le scellement d'un bouchon (40) en un matériau réfractaire aux parties métalliques, à l'extrémité électriquement ouverte du capteur, laissant libres l'extrémité (31) de l'âme (11) et éventuellement l'extrémité (34) de la gaine intermédiaire (14) quand elle existe.

8. Procédé selon la revendication 7, caractérisé en ce que la réalisation du bouchon inclut une vitrification par plasma.

## Patentansprüche

1. Ein kapazitiver Sensor mit einem Sensorkörper (10) mit einem Gehäuse (12), einer leitenden Vorderfläche (31) und Isolationsmitteln (13) zwischen der leitenden Fläche und dem Gehäuse, und mit einem Koaxialkabel (20) abgeschirmten Typs mit mineralischem Isolator mit einem Mantel (22) und einem Mittelleiter, dem sogenannten Kern (21), die beiden sind durch den besagten mineralischen Isolator (23) voneinander getrennt, das besagte Koaxialkabel (20) ist vorgesehen für die Verbindung der leitenden Fläche zu einer Vorrichtung zur Messung der Kapazität des Systems, das durch diese leitende, einen ersten Kondensatorbelag bildende Fläche und durch eine mit einer bestimmten Entfernung (d) gegenüberliegende, einen zweiten Kondensatorbelag bildende Referenzfläche gebildet wird, dadurch gekennzeichnet, daß der Körper des kapazitiven Sensors aus einem Endstücks (10) des Koaxialkabels (20), mit einem Endstück (11) des Leiterkerns (21), der mit einem flachen, offenen Ende versehen ist, um direkt die besagte leitende Vorderfläche (31) zu bilden, mit einem Endstück (12) des Mantels (22) zur Bildung des besagten Gehäuses (12) und einem Endstück (13) des mineralischen Isolators (23) zur Isolierung des Gehäuses (12) der leitenden Vorderfläche (31) gebildet wird,
und dadurch, daß zur Bildung des Körpers des Sensors die Durchmesser des Leiterkerns (11), des Mantels (12) und des mineralischen Isolators (13) in dem besagten Endstück (10) mehrmals den jeweiligen Durchmessern der Kerns (21), des Mantels (22) und des mineralischen Isolators (23) des eigentlichen Koaxialkabels (20) entsprechen.

2. Ein Sensor laut Anspruch 1, dadurch gekennzeichnet, daß das Kabel (20) und der Körper des Sensors (10) zwischen dem Kern (21,11) und dem äußeren Mantel (22,12) einen konzentrischen, metallenen Zwischenmantel (24,14) haben, vom Kern und dem äußeren Mantel durch einen mineralischen Isolator (23,13) aus verdichtetem Pulver isoliert, um als Arretierring (34) zu dienen.

3. Ein Sensor laut einem der Ansprüche 1 oder 2, dadurch gekennzeichnet, daß das freie Ende des Sensors mit einem hitzebeständigen, isolierenden Verschluß (40) versehen ist, der das Ende des Kerns (31) und des gegebenenfalls vorhandenen Zwischenmantels (34) frei läßt.

4. Ein Sensor laut einem der Ansprüche 1 bis 3, dadurch gekennzeichnet, daß der Kern (21,11) ein einfacher Mittelleiter ist.

5. Ein Sensor laut einem der Ansprüche 1 bis 3, dadurch gekennzeichnet, daß der Kern aus Leitungen eines Thermoelements (21b,11b) gebildet wird, wobei die Lötstelle die leitende Fläche bildet, um zugleich eine Temperatur und eine Kapazität zu messen.

6. Ein Verfahren zur Herstellung eines kapazitiven Sensors mit einem Sensorkörper (10) mit einem Gehäuse (12), einer leitenden Vorderfläche (31) und Isolationsmitteln (13) zwischen der leitenden Fläche und dem Gehäuse, und mit einem Koaxialkabel (20) abgeschirmten Typs mit mineralischem Isolator (23) mit einem zum Gehäuse (12) verbundenen Mantel (22) und einem zur vorderen Leiterfläche (31) verbundenen Mittelleiter (21), dem sogenannten Kern, und dem besagten mineralischen Isolator (23) in Verbindung mit den Isolationsmitteln (13), der besagte kapazitive Sensor wird aus einem Endstück (10) des Koaxialkabels (20) gebildet, in dem die Durchmesser des Leiterkerns (11), des Mantels (12,14) und des mineralischen Isolators (13) mehrmals den jeweiligen Durchmessern der Kerns (21), des Mantels (22,24) und des mineralischen Isolators (23) des eigentlichen Koaxialkabels (20) entsprechen,
dieses Herstellungsverfahren besteht aus :
- der Erstellung eines Rohteils größeren oder gleich großen Durchmessers des Gehäuses (12) des fertiggestellten Sensors, mit einem Kern (31, 21, 11), der aus einem einfachen Leiter (21a,11b) oder einem Thermoelement (21b, 11b) gebildet wird und eine oder zwei kozentrische Metallmäntel (12, 22; 34, 14, 24) und ein isolierendes Füllmaterial aus mineralischem Pulver (13, 23) zur Trennung der Metallelemente aufweist,
- der Anwendung eines mechanischen Verfahrens aufeinanderfolgender Verminderungen des Durchmessers durch Drahtziehen und Hämmern, unterbrochen von Nachhärtungen bei hohen Temperaturen, der Bereich des eigentlichen Koaxialkabels (20) wird einer stärkeren Verminderung des Durchmessers unterzogen als der Bereich des Sensors (10), in einem Verhältnis der Größenordnung von 1/2 bis 1/10.

7. Ein Verfahren laut Anspruch 6, dadurch gekennzeichnet, daß es das Ausgießen eines Verschlusses (40) aus einem hitzebeständigen Material in den Metallteilen beinhaltet, am elektrisch offenen Ende des Sensors, wodurch das Ende (31) des Kerns (11) und gegebenenfalls das Ende (34) des Zwischenmantels (14) freigelassen wird.

8. Ein Verfahren laut Anspruch 7, mit dem Merkmal, daß die Herstellung des Sensors ein Plasmaprüfverfahren beinhaltet.

## Claims

1. A capacitive sensor, comprising a sensor body (10) which includes a housing (12), a conductive front surface (31) and insulating means (13) provided between the conductive front surface and the housing, and comprising a coaxial cable (20) of the type shielded by a mineral insulator, which includes a sheath (22) and a central conductor called core (21) which are separated by said mineral insulator (23), which coaxial cable (20) is arranged to connect the conductive surface to a device for measuring the capacitance of the system formed by said conductive surface, constituting a first capacitor plate, and a reference conductive surface which is arranged opposite thereto and at a given distance (d) therefrom and constitutes a second capacitor plate, characterized in that the capacitive sensor body is formed by a terminal part (10) of the coaxial cable (20), having a terminal part (11) of the conductive core (21) which comprises a flat, open end in order to form directly said conductive front surface (31), having a terminal part (12) of the sheath (22) for forming said housing (12), and having a terminal part (13) of the mineral insulator (23) for insulating the housing (12) from the conductive front surface (31),
and that in order to form the sensor body the diameters of the conductive core (11), of the sheath (12), and of the mineral insulator (13) in said terminal part (10) amount to several times the diameters of the core (21), of the sheath (22) and of the mineral insulator (23), respectively, of the actual coaxial cable (20).

2. A sensor as claimed in Claim 1, characterized in that the cable (20) and the sensor body (10) comprise, between the core (21, 11) and the external sheath (22, 12), a concentric metallic intermediate sheath (24, 14) which is insulated from the core and the external sheath by a compacted powdery mineral insulator (23, 13) in order to serve as a shielding ring (34).

3. A sensor as claimed in one of the Claims 1 or 2, characterized in that the free end of the sensor is provided with a refractory insulating cap (40) which leaves exposed the end of the core (31) and of the intermediate sheath (34), if present.

4. A sensor as claimed in any one of the Claims 1 to 3, characterized in that the core (21, 11) is a single central conductor.

5. A sensor as claimed in any one of the Claims 1 to 3, characterized in that the core is formed by the wires of a thermocouple (21b, 11b), the welding point of which constitutes the conductive surface for the measurement of a temperature as well as a capacitance.

6. A method of manufacturing a capacitive sensor, comprising a sensor body (10) which includes a housing (12), a conductive front surface (31) and insulating means (13) provided between the conductive front surface and the housing, and comprising a coaxial cable (20) of the type shielded by a mineral insulator, which includes a sheath (22) which is connected to the housing (12), a central conductor called core (21) which is connected to the conductive front surface (31), and said mineral insulator (23) in correspondence with the insulating means (13), said capacitive sensor being formed by a terminal part (10) of the coaxial cable (20) in which the diameter of the conductive core (11), of the sheath (12, 14) and of the mineral insulator (13) amount to several times the diameters of the core (21), of the sheath (22, 24) and of the mineral insulator (23), respectively, of the actual coaxial cable (20), said method comprising:
- the formation of a blank having a diameter larger than or equal to that of the housing (12) of the finished sensor, a core (31, 21, 11) which is formed by a single conductor (21a, 11a) or by a thermocouple (21b, 11b), and one or two concentric metallic sheaths (12, 22; 34, 14, 24), and a powdery mineral insulating filler material (13, 23) separating the metallic elements,
- the application of a mechanical process for successively reducing the diameter of the blank by drawing and hammering, interrupted by annealing at a high temperature, the zone of the actual coaxial cable (20) being subject to a diameter reduction which is greater than that of the zone of the sensor body (10), the ratio being of an order of from 1/2 to 1/10.

7. A method as claimed in Claim 6, characterized in that a cap (40) of a refractory material is sealed to the metallic parts, at the electrically open end of the sensor, leaving exposed the end (31) of the core (11) and possibly the end (34) of the intermediate sheath (14), if present.

8. A method as claimed in Claim 7, characterized in that the formation of the cap includes plasma vitrification.
